(19) Europäisches Patentamt
European Patent Office
Office européen des brevets

(11) EP 3 559 088 B1

(12) FASCICULE DE BREVET EUROPEEN

(45) Date de publication et mention de la délivrance du brevet:
**18.11.2020 Bulletin 2020/47**

(21) Numéro de dépôt: **17832252.5**

(22) Date de dépôt: **19.12.2017**

(51) Int Cl.:
***C08G 77/08*** *(2006.01)* ***C08L 83/04*** *(2006.01)*

(86) Numéro de dépôt international:
**PCT/FR2017/000250**

(87) Numéro de publication internationale:
**WO 2018/115601 (28.06.2018 Gazette 2018/26)**

(54) **COMPOSE DU COBALT UTILE COMME CATALYSEUR D'HYDROSILYLATION, DE SILYLATION DESHYDROGENANTE ET DE RETICULATION DE COMPOSITIONS SILICONES**

ALS KATALYSATOR ZUR HYDROSILYLIERUNG, DEHYDROGENATIVEN SILYLIERUNG UND VERNETZUNG VON SILIKONZUSAMMENSETZUNGEN NÜTZLICHE KOBALTVERBINDUNG

COBALT COMPOUND USEFUL AS CATALYST FOR HYDROSILYLATION, DEHYDROGENATIVE SILYLATION AND CROSSLINKING OF SILICONE COMPOSITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2016 FR 1601842**

(43) Date de publication de la demande:
**30.10.2019 Bulletin 2019/44**

(73) Titulaires:
- **ELKEM SILICONES France SAS**
  **69003 Lyon (FR)**
- **Université Claude Bernard Lyon 1**
  **69622 Villeurbanne Cedex (FR)**
- **Centre National de la Recherche Scientifique**
  **75016 Paris (FR)**

(72) Inventeurs:
- **BOUSQUIE, Magali**
  **69008 Lyon (FR)**
- **MONTEIL, Vincent**
  **69008 Lyon (FR)**
- **RAYNAUD, Jean**
  **69100 Villeurbanne (FR)**
- **PUILLET, Magali**
  **69008 Lyon (FR)**

(56) Documents cités:
**US-A1- 2014 231 702** **US-A1- 2015 141 647**

- **DAISUKE NODA ET AL: "Non-Precious-Metal Catalytic Systems Involving Iron or Cobalt Carboxylates and Alkyl Isocyanides for Hydrosilylation of Alkenes with Hydrosiloxanes", JOURNAL OF THE AMERICAN CHEMICAL SOCIETY, vol. 138, no. 8, 2 mars 2016 (2016-03-02), pages 2480-2483, XP055348165, ISSN: 0002-7863, DOI: 10.1021/jacs.5b11311**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

Le domaine de l'invention est celui des réactions entre un composé insaturé et un composé comprenant au moins un atome d'hydrogène lié à un atome de silicium. Il peut s'agir des réactions d'hydrosilylation également appelées polyadditions et/ou des réactions de silylation déshydrogénante. L'invention concerne l'utilisation d'un nouveau type de catalyseurs pour ces réactions. Plus spécifiquement, la présente invention concerne l'utilisation de composés du cobalt comme catalyseurs d'hydrosilylation et/ou de silylation déshydrogénante. Ces catalyseurs permettent également le durcissement par réticulation de compositions silicones.

### ARRIERE-PLAN TECHNOLOGIQUE

Lors d'une réaction d'hydrosilylation (également appelée polyaddition), un composé comprenant au moins une insaturation réagit avec un composé comprenant au moins une fonction hydrogénosilyle, c'est-à-dire un atome d'hydrogène lié à un atome de silicium. Cette réaction peut par exemple être décrite dans le cas d'une insaturation de type alcène par :

(1)

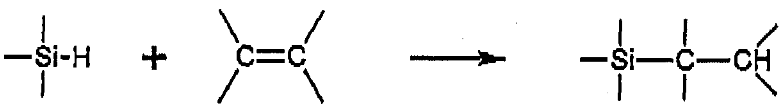

ou dans le cas d'une insaturation de type alcyne par :

(2)

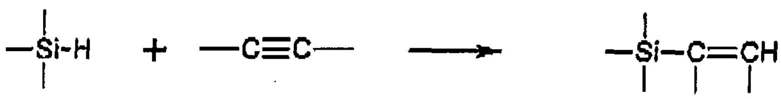

Lors d'une réaction de silylation déshydrogénante, la réaction peut être décrite par :

(3)

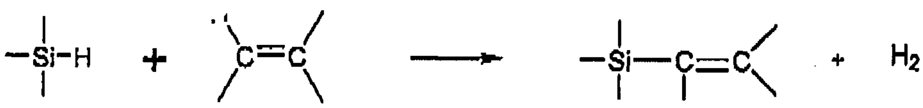

L'hydrosilylation de composés insaturés est réalisée par catalyse, Typiquement, le catalyseur approprié pour cette réaction est un catalyseur au platine. Actuellement, la plupart des réactions industrielles d'hydrosilylation sont catalysées par le complexe de platine de Karstedt, de formule générale $Pt_2$(divinyltétraméthyldisiloxane)$_3$ (ou en abrégé $Pt_2(DVTMS)_3$) :

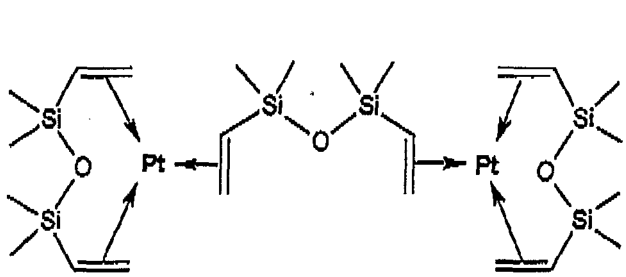

Au début des années 2000, la préparation de complexes de platine - carbène de formule générale :

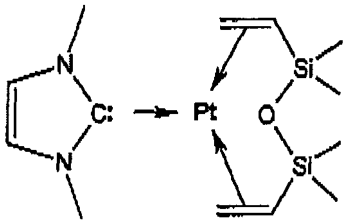

a permis d'avoir accès à des catalyseurs plus stables (voir par exemple la demande internationale de brevet WO 01/42258).

Toutefois, l'utilisation de catalyseurs au platine est toujours problématique. Il s'agit d'un métal cher, en voie de raréfaction et dont le coût fluctue énormément. Son utilisation à l'échelle industrielle est difficile. Il serait donc avantageux de disposer d'une alternative à la réaction d'hydrosilylation catalysée par du platine. Il serait tout particulièrement intéressant de proposer un nouveau type de catalyseur pour les réactions d'hydrosilylation ne contenant pas de platine.

Il serait donc intéressant de proposer des catalyseurs alternatifs aux catalyseurs à base de platine et de disposer de nouvelles compositions silicones réticulables et/ou durcissables au moyen de catalyseurs ne présentant plus les problèmes décrits ci-dessus.

L'utilisation d'autres catalyseurs a été proposée par le passé, par exemple l'utilisation de rhodium ou d'iridium. Toutefois, ces métaux sont tout aussi rares que le platine, et leur utilisation ne résout pas les problèmes mentionnés.

Récemment publiée, la demande de brevet WO2016/071652 décrit des complexes de cobalt avec des ligands bétadicétone comme catalyseurs d'hydrosilylation mais la réactivité de tels complexes reste inférieure à celle du platine. La demande de brevet US20140231702 divulgue comme catalyseur d'hydrosilylation le produit de réaction d'un précurseur de cobalt et d'un ligand mais l'activité de tels catalyseurs n'est pas décrite.

Un des objectifs de la présente invention est donc de proposer un procédé d'hydrosilylation et/ou de silylation déshydrogénante entre un composé comprenant au moins un atome d'hydrogène lié à un atome de silicium et un composé insaturé, qui utiliserait un catalyseur avantageusement peu coûteux, d'approvisionnement facile, et peu ou pas toxique. En outre, on souhaite que les rendements d'hydrosilylation obtenus avec ce catalyseur alternatif soient les plus élevés possibles. Dans ce contexte, un des objectifs de la présente invention est de proposer un nouveau catalyseur, adapté notamment à la catalyse des réactions d'hydrosilylation, avec une activité suffisante pour sa une mise en œuvre industrielle

Cet objectif est atteint à l'aide d'un catalyseur qui est un composé du cobalt présentant une structure spécifique.

## BREVE DESCRIPTION DE L'INVENTION

Ces objectifs ont été atteints grâce à la mise en œuvre d'un composé du cobalt comme catalyseur d'hydrosilylation et/ou silylation déshydrogénante.

La présente invention a pour premier objet l'utilisation en tant que catalyseur d'hydrosilylation et/ou de silylation déshydrogénante d'un composé du cobalt de formule (1)

$$[Co(N(SiR_3)_2)_x]_y \qquad (1)$$

dans laquelle :

- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone et les groupes aryles ayant de 6 à 12 atomes de carbone,
- x=1 ,2 ou 3 et
- y=1 ou 2.

En outre, l'invention a également pour objet un procédé pour préparer des produits d'hydrosilylation et/ou de silylation déshydrogénante par réaction entre un composé insaturé comprenant au moins une fonction alcène et/ou au moins une fonction alcyne, avec un composé comprenant au moins une fonction hydrogénosilyle, ledit procédé étant caractérisé par le fait qu'il est catalysé par un composé du cobalt de formule (1) tel que décrit ci-dessus.

Un autre objet de l'invention est une composition comprenant :

- au moins un composé insaturé comprenant au moins une fonction alcène et/ou au moins une fonction alcyne,

- au moins un composé comprenant au moins une fonction hydrogénosilyle, et
- un composé du cobalt de formule (1) tel que décrit ci-dessus.

## DESCRIPTION DETAILLEE DE L'INVENTION

### Procédé

La présente invention a donc pour objet un procédé pour préparer des produits d'hydrosilylation et/ou de silylation déshydrogénante par réaction entre un composé insaturé A comprenant au moins une fonction alcène et/ou au moins une fonction alcyne, avec un composé B comprenant au moins une fonction hydrogénosilyle, ledit procédé étant caractérisé par le fait qu'il est catalysé par un composé du cobalt C de formule (1) :

$$[Co(N(SiR_3)_2)_x]_y \qquad (1)$$

dans laquelle :

- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par: l'atome d'hydrogène, les groupes alkyles ayant de 1 à 8 atomes de carbone, les groupes cycloalkyles ayant de 3 à 8 atomes de carbone et les groupes aryles ayant de 6 à 12 atomes de carbone,
- x=1, 2 ou 3 et
- y=1 ou 2.

Dans cette formule (1) le cobalt peut être au degré d'oxydation I, II ou III.

Il est du mérite des inventeurs d'avoir mis en évidence que les composés **C** de formule (1) telle que décrits ci-dessus pouvaient catalyser efficacement des réactions d'hydrosilylation et ou de silylation déshydrogénante.

Ces catalyseurs, en particulier, présentent l'avantage de ne pas nécessiter l'emploi de solvants car ils présentent une bonne solubilité dans les huiles silicones.

Selon un mode de réalisation de l'invention, dans le procédé selon l'invention le composé **C** est un composé de formule (2):

$$[Co(N(SiR_3)_2)_2]_y \qquad (2)$$

dans laquelle :

- Co représente le cobalt au degré d'oxydation II et
- R est tel que défini ci-dessus et
- y=1 ou 2.

Selon un mode préféré de réalisation de l'invention, dans le procédé selon l'invention le catalyseur C est un composé de formule (3):

$$[Co(N(Si(CH_3)_3)_2)_2]_y \qquad (3)$$

dans laquelle :

- Co représente le cobalt au degré d'oxydation II et
- y=1 ou 2.

Selon une variante, le composé C de formule (3) ci-dessus peut être synthétisé in-situ, en présence du composé insaturé A, par réaction quantitative entre $CoCl_2$ et $LiN(SiMe_3)_2$.

Le composé insaturé A mis en œuvre dans le procédé selon l'invention est un composé chimique comprenant au moins une insaturation ne faisant pas partie d'un cycle aromatique. Le composé insaturé **A** comprend au moins une fonction alcène et/ou une fonction alcyne. Tout composé comprenant au moins une fonction alcène et/ou une fonction alcyne peut être utilisé dans le procédé selon l'invention, dans la mesure où il ne contient pas de fonction chimique réactive pouvant gêner, voire empêcher la réaction d'hydrosilylation.

Selon un mode de réalisation particulièrement préféré, le composé insaturé A mis en œuvre dans le procédé d'hydrosilylation selon l'invention comprend de 2 à 40 atomes de carbone et une ou plusieurs fonctions alcène ou alcyne

et.

Le composé insaturé **A** peut, de façon préférée, être choisi dans le groupe constitué par :

- l'acétylène, les acrylates et les méthacrytales d'alkyles en $C_1$ à $C_4$
- l'acide acrylique ou méthacrylique
- les alcènes en $C_4$ à $C_{12}$, de préférence l'octène et plus préférentiellement le 1-octène,
- l'alcool allylique, l'allylamine, l'éther d'allyle et glycidyle, l'éther d'allyle et de pipéridine, préférentiellement l'éther d'allyle et de pipéridine stériquement encombrée,
- les styrènes, préférentiellement l'alpha-méthyl-styrène, le 1,2-époxy-4-vinylcyclohexane, le chlorure d'allyle, les alcènes chlorés, de préférence le chlorure d'allyle, et
- les alcènes fluorés, de préférence de 4,4,5,5,6,6,7,7,7-nonafluoro-1-heptène.

Le composé insaturé **A** peut être choisi parmi les composés comprenant plusieurs fonctions alcènes, de préférence deux ou trois fonctions alcènes, et de façon particulièrement préférée, le composé A est choisi parmi les composés suivants :

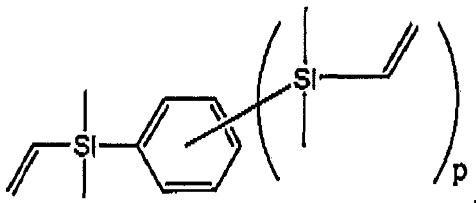
,

avec p valant 1 ou 2,

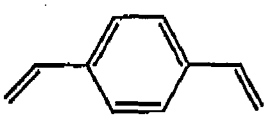
,
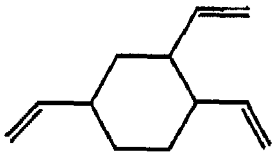
,
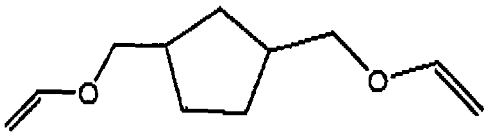
,

et

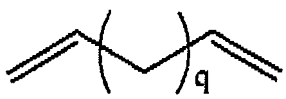
,

avec q valant de 2 à 6, de préférence q valant 2 ou 4.

Selon un mode de réalisation préféré, le composé insaturé **A** est choisi parmi les composés organopolysiloxanes comportant des motifs de formule (I) :

$$Z_gU_hSiO_{(4-(g+h))/2} \qquad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou 2, h = 0, 1 ou 2 et g+h =1, 2 ou 3 ;

et comportant éventuellement d'autres motifs de formule (II) :

$$U_lSiO_{(4-l)/2} \qquad (II)$$

dans laquelle U a la même signification que ci-dessus, et i =0,1, 2, ou 3.

Il est entendu dans la formule (I) et dans la formule (II) ci-dessus que, si plusieurs groupes U sont présents, ils peuvent être identiques ou différents les uns des autres. Dans la formule (I), le symbole g peut préférentiellement être égal à 1.

Dans la formule (I) et dans la formule (II), U peut représenter un radical monovalent choisi dans le groupe constitué par les groupes alkyles ayant 1 à 8 atomes de carbone, éventuellement substitué par au moins un atome d'halogène tel que le chlore ou le fluor, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Lesdits organopolysiloxanes peuvent être des huiles de viscosité dynamique de l'ordre de 10 à 100000 mPa.s à 25°C, généralement de l'ordre de 10 à 70000 mPa.s à 25°C, ou des gommes de viscosité dynamique de l'ordre de 1 000 000 mPa.s ou plus à 25°C.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Ces organopolysiloxanes peuvent présenter une structure linéaire, ramifiée ou cyclique. Leur degré de polymérisation est, de préférence, compris entre 2 et 5000.

Lorsqu'il s'agit de polymères linéaires, ceux-ci sont essentiellement constitués de motifs siloxyles « D » choisis parmi le groupe constitué par les motifs siloxyles $Z_2SiO_{2/2}$, $ZUSiO_{2/2}$ et $U_2SiO_{2/2}$, et de motifs siloxyles « M » choisis parmi le groupe constitué par les motifs siloxyles $ZU_2SiO_{1/2}$, $Z_2USiO_{1/2}$ et $Z_3SiO_{1/2}$. Les symboles Z et U sont tels que décrits ci-dessus.

A titre d'exemples de motifs « M » terminaux, on peut citer les groupes triméthylsiloxy, diméthylphénylsiloxy, diméthylvinylsiloxy ou diméthylhexènylsiloxy.

A titre d'exemples de motifs « D », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy,

Des exemples d'organopolysiloxanes linéaires pouvant être des composés insaturés A selon l'invention sont :

- un poly(diméthylsiloxane) à extrémités diméthylvinylsilyles ;
- un poly(diméthylsiloxane-co-méthylphénylsiloxane) à extrémités diméthyl-vinylsilyles ;
- un poly(diméthylsiloxane-co-méthylvinylsiloxane) à extrémités diméthyl-vinylsilyles ; et
- un poly(diméthylsiloxane-co-méthylvinylsiloxane) à extrémités triméthyl-silyles ; et un poly(méthylvinylsiloxane) cycliques.

Les organopolysiloxanes cycliques pouvant être également des composés insaturés A selon l'invention sont par exemple, ceux constitués de motifs siloxyles «D» de formules suivantes : $Z_2SiO_{2/2}$, $U_2SiO_{2/2}$ ou $ZUSiO_{2/2}$, qui peuvent être du type dialkylsiloxy, alkylarylsiloxy, alkylvinylsiloxy, alkylsiloxy. Lesdits organopolysiloxanes cycliques présentent une viscosité de l'ordre de 10 à 5000 mPa.s à 25°C.

Selon un mode préféré de réalisation, on peut mettre en œuvre dans le procédé selon l'invention un second composé organopolysiloxane comportant, par molécule, au moins deux radicaux alcényles en $C_2$-$C_6$ liés à des atomes de silicium, différent du composé organopolysiloxane **A**, ledit second composé organopolysiloxane étant de préférence le divinyltétraméthylsiloxane (DVTMS).

De préférence, le composé organopolysiloxane **A** a une teneur massique en motif Si-vinyle comprise entre 0,001 et 30%, de préférence entre 0,01 et 10%.

Comme autres exemples de composés insaturés **A** on peut citer les résines silicones comprenant au moins un radical vinyle. Par exemple elles peuvent être choisies parmi le groupe constitué par les résines silicones suivantes :

- $MD^{VI}Q$ où les groupes vinyles sont inclus dans les motifs D,
- $MD^{VI}TQ$ où les groupes vinyles sont inclus dans les motifs D,
- $MM^{VI}Q$ où les groupes vinyles sont inclus dans une partie des motifs M,
- $MM^{VI}TQ$ où les groupes vinyles sont inclus dans une partie des motifs M,
- $MM^{VI}DD^{VI}Q$ où les groupes vinyles sont inclus dans une partie des motifs M et D,
- et leurs mélanges,

avec :

- $M^{VI}$ = motif siloxyle de formule $(R)_2(vinyle)SiO_{1/2}$
- $D^{VI}$ = motif siloxyle de formule $(R)(vinyle)SiO_{2/2}$
- T = motif siloxyle de formule $(R)SiO_{3/2}$

- Q = motif siloxyle de formule $SiO_{4/2}$
- M = motif siloxyle de formule $(R)_3SiO_{1/2}$
- D = motif siloxyle de formule $(R)_2SiO_{2/2}$

et les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle. De préférence, les groupements R sont des méthyles.

Le procédé selon l'invention met également en œuvre un composé **B** comprenant au moins une fonction hydrogénosilyle.

De préférence, le composé **B** comprenant au moins une fonction hydrogénosilyle est choisi parmi le groupe constitué par:

- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyles, et
- un polymère organique comprenant des fonctions hydrogénosilyles en positions terminales.

Par composé « silane », on entend dans la présente invention les composés chimiques comprenant un atome de silicium lié à quatre atomes d'hydrogènes ou à des substituants organiques. Par composé « polysilane », on entend dans la présente invention les composés chimiques possédant au moins un motif ≡Si-Si≡.

Parmi les composés silanes comprenant au moins un atome d'hydrogène lié à un atome de silicium nous pouvons citer le phénylsilane et le triethoxysilane.

Le composé B peut également être un composé organopolysiloxane comprenant au moins un atome d'hydrogène lié à un atome de silicium. Par composé « organopolysiloxane », on entend dans la présente invention les composés chimiques possédant au moins un motif ≡Si-O-Si≡, Le composé organopolysiloxane comprend au moins deux atomes de silicium, de préférence au moins 3 atomes de silicium ou plus.

Ledit composé B peut avantageusement être un organopolysiloxane comprenant au moins un motif de formule (III) :

$$H_dU_eSiO_{(4-(d+e))/2} \qquad (III)$$

dans laquelle ;

- les radicaux U, identiques ou différents, représentent un radical hydrocarboné ayant de 1 à 12 atomes de carbone,
- d=1ou2, e=0, 1 ou2et d+e = 1, 2 ou 3 ;

et éventuellement d'autres motifs de formule (IV) :

$$U_fSiO_{(4-f)/2} \qquad (IV)$$

dans laquelle U a la même signification que ci-dessus, et f =0,1, 2, ou 3.

Il est entendu dans la formule (III) et dans la formule (IV) ci-dessus que, si plusieurs groupes U sont présents, ils peuvent être identiques ou différents les uns des autres. Dans la formule (III), le symbole d peut préférentiellement être égal à 1. De plus, dans la formule (III) et dans la formule (IV), U peut représenter un radical monovalent choisi dans le groupe constitué par un groupe alkyle ayant 1 à 8 atomes de carbone, éventuellement substitué par au moins un atome d'halogène tel que le chlore ou le fluor, les groupes alkyles ayant de 1 à 8 atomes de carbone, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Ces organopolysiloxanes peuvent présenter une structure linéaire, ramifiée, ou cyclique. Le degré de polymérisation est de préférence supérieur ou égal à 2. Plus généralement, il est inférieur à 5000.

Lorsqu'il s'agit de polymères linéaires, ceux-ci sont essentiellement constitués :

- de motifs siloxyles « D » choisis parmi les motifs de formules suivantes $U_2SiO_{2/2}$ ou $UHSiO_{2/2}$, et
- de motifs siloxyles « M » choisis parmi les motifs de formules suivantes $U_3SiO_{1/2}$ ou $U_2HSiO_{1/2}$.

Ces organopolysiloxanes linéaires peuvent être des huiles de viscosité dynamique de l'ordre de 1 à 100 000 mPa.s à 25°C et plus généralement de l'ordre de 10 à 5000 mPa.s à 25°C.

Des exemples d'organopolysiloxanes pouvant être des composés **B** selon l'invention comprenant au moins un atome d'hydrogène lié à un atome de silicium sont :

- un poly(diméthylsiloxane) à extrémités hydrogénodiméthylsilyles;
- un poly(diméthylsiloxane-co-méthylhydrogénosiloxane) à extrémités triméthyl-silyles;
- un poly(diméthylsiloxane-co-méthylhydrogénosiloxane) à extrémités hydrogénodiméthylsilyles ;
- un poly(méthylhydrogénosiloxane) à extrémités triméthylsilyles ; et
- un poly(méthylhydrogénosiloxane) cycliques.

Lorsqu'il s'agit d'organopolysiloxanes cycliques, ceux-ci sont constitués de motifs siloxyles « D » de formules suivantes $U_2SiO_{2/2}$ et $UHSiO_{2/2}$, qui peuvent être du type dialkylsiloxy ou alkylarylsiloxy ou de motifs $UHSiO_{2/2}$ uniquement. Ils présentent alors une viscosité de l'ordre de 1 à 5000 mPa.s.

De préférence, le composé **B** est un composé organopolysiloxane comprenant par molécule au moins deux et de préférence trois fonctions hydrogénosilyles (Si-H).

Sont notamment préférés à titre de composé organohydrogénopolysiloxane B, les oligomères et polymères répondant à la formule générale **(B.3)** :

Conviennent particulièrement à l'invention à titre de composé organohydrogénopolysiloxane B les composés suivants :

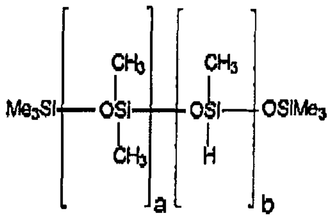
S1

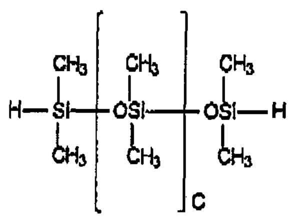
S2

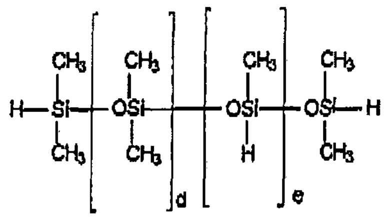
S3

avec a, b, c, d et e définis ci-dessous :

- dans le polymère de formule S1 :
- $0 \leq a \leq 150$, de préférence $0 \leq a \leq 100$, et plus particulièrement 0 a $\leq 20$, et
- $1 \leq b \leq 90$ de préférence $10 \leq b \leq 80$ et plus particulièrement $30 \leq b \leq 70$,
- dans le polymère de formule S2 : $0 \leq c \leq 15$
- dans le polymère de formule S3 : $5 \leq d \leq 200$, de préférence $20 \leq d \leq 100$, et 2 s $e \leq 90$, de préférence $10 \leq e \leq 70$.

En particulier, un composé organohydrogénopolysiloxane **B** convenant à l'invention est le composé de formule S1, où a=0.

De préférence le composé organohydrogénopolysiloxane **B** a une teneur massique en motif SiH comprise entre 0,2 et 91%, de préférence entre 0,2 et 50%.

Enfin, le composé B peut être un polymère organique comprenant des fonctions. hydrogénosilyles en positions terminales. Le polymère organique peut par exemple être un polyoxoalkylène, un polymère hydrocarboné saturé ou un poly(méth)acrylate. Des polymères organiques comprenant des fonctions réactives en positions terminales sont notamment décrits dans les demandes de brevet US 2009/0182099 et US 2009/0182091.

Selon un mode de réalisation particulier de la présente invention, il est possible que le composé insaturé A et le composé B comprenant au moins une fonction hydrogénosilyle soient un seul et même composé, comprenant d'une part au moins une fonction alcène et/ou une fonction alcyne, et d'autre part au moins un atome d'hydrogène lié à un atome de silicium. Ce composé peut alors être qualifié de « bifonctionnel », et il est susceptible de réagir sur lui-même par réaction d'hydrosilylation. L'invention peut donc aussi concerner un procédé d'hydrosilylation d'un composé bifonctionnel avec lui-même, ledit composé bifonctionnel comprenant d'une part au moins une fonction alcène et/ou une fonction alcyne, et d'autre part au moins un atome de silicium et au moins un atome d'hydrogène lié à l'atome de silicium, ledit procédé étant caractérisé par le fait qu'il est catalysé par un composé C tel que décrit ci-dessus.

Des exemples d'organopolysiloxanes pouvant être des composés bifonctionnels sont :

- un poly(diméthylsiloxane-co-hydrogénométhylsiloxane-co-vinylméthyl-siloxanes) à extrémités diméthylvinylsilyles;
- un poly(diméthylsiloxane-co-hydrogénométhylsiloxane-co-vinylméthyl-siloxanes) à extrémités diméthylhydrogénosilyles ; et

- un poly(diméthylsiloxane-co-hydrogénométhylsiloxane-co-propylglycidyléther-méthylsiloxane) à extrémités triméthylsilyles.

Lorsqu'il est question de la mise en oeuvre du composé insaturé A et du composé B comprenant au moins une fonction hydrogénosilyle, l'homme du métier comprend qu'on entend également la mise en œuvre d'un composé bifonctionnel.

Selon un autre mode de réalisation, le procédé selon l'invention est mis en œuvre en présence d'un composé E de formule (4) suivante :

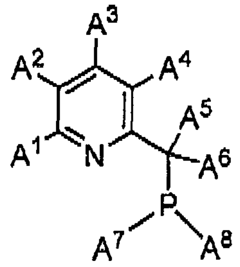

(4)

dans laquelle :

- $A^1$, $A^2$, $A^3$ et $A^4$ sont choisis parmi : l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les halogènes et les groupes alkoxy de formule $OR^1$ où $R^1$ est un groupe alkyle ayant de 1 à 8 atomes de carbone.
- $A^5$ et $A^6$ sont choisis parmi : l'atome d'hydrogène, les groupes alkyle ayant de 1 à 8 atomes de carbone, les groupes cycloalkyles ayant de 6 à 12 atomes de carbone et les groupes aryles ayant de 6 à 12 atomes de carbone et
- $A^7$ et $A^8$ sont choisis parmi : les groupes alkyles ayant de 1 à 8 atomes de carbone, les groupes cycloalkyles ayant de 6 à 12 atomes de carbone, les groupes aryles ayant de 6 à 12 atomes de carbone et les groupes alkoxy de formule $OR^1$ où $R^1$ est un groupe alkyle ayant de 1 à 8 atomes de carbone.

De préférence, dans la formule (4) ci-dessus :

- $A^1$, $A^2$, $A^3$ et $A^4$ sont des atomes d'hydrogène,
- $A^5$ et $A^6$ sont des atomes d'hydrogène,
- $A^7$ et $A^8$ sont choisis parmi : les groupes alkyles ayant de 1 à 8 atomes de carbone, les groupes cycloalkyles ayant de 6 à 12 atomes de carbone, les groupes aryles ayant de 6 à 12 atomes de carbone et les groupes alkoxy de formule $OR^1$ où $R^1$ est un groupe alkyle ayant de 1 à 8 atomes de carbone et de préférence $A^7$ et $A^8$ sont choisis parmi les groupes tertiobutyle, isopropyle, méthyle, éthyle, phényle et cyclohexyle.

Encore plus préférentiellement le composé E est choisi parmi les composés de formule (5) à (10) suivants :

| | | |
|---|---|---|
| 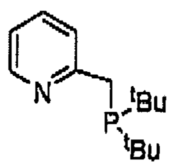 (5) | 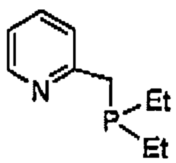 (6) | 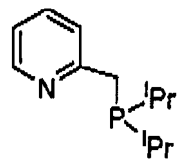 (7) |
| 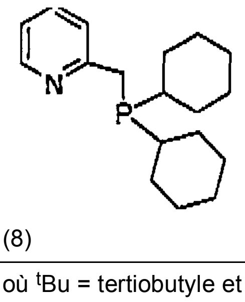 (8) | 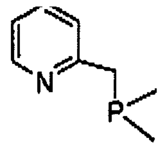 (9) | 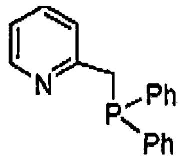 (10) |
| où $^{t}Bu$ = tertiobutyle et $^{i}Pr$ = isopropyle | | |

Sans vouloir être liés par une quelconque théorie le composé **C** et le composé **E** peuvent réagir, en partie ou en totalité, pour former un composé **C**' différent de **C** qui catalyse également les réactions d'hydrosilylation et/ou de silylation déshydrogénante entre les composés **A** et **B**. Selon une variante de l'invention, il est possible de mélanger le composé **C**, le composé **E** et le composé **A** pendant une durée comprise entre quelques minutes et plusieurs jours avant l'ajout de composé **B**.

Dans le procédé selon l'invention on peut mettre en œuvre des agents réducteurs autres que le composé B comprenant au moins une fonction hydrogénosilyle. Comme exemple d'agents réducteurs on peut citer les hydrures métalliques comme $LiAlH_4$, les borohydrures métalliques comme $NaEt_3BH$ ou le $LiEt_3BH$ ou le NaBH4. Ces agents réducteurs sont bien connus de l'homme de l'art. Sous une autre variante, le procédé selon l'invention peut mettre en oeuvre un activateur ionique dérivé du bore comme par exemple les boranes ou les borates.

De préférence, le procédé selon l'invention ne met pas en œuvre d'agents réducteurs ou d'activateurs ioniques.

Le procédé selon l'invention peut être mis en œuvre en présence ou en absence de solvant. Selon un mode préféré de réalisation, le procédé selon l'invention est mis en œuvre en l'absence de solvant. Selon une variante de l'invention, un des réactifs, par exemple le composé insaturé A, peut jouer le rôle de solvant.

Le procédé selon l'invention peut être mis en œuvre à une température comprise entre 15°C et 200°C, préférentiellement entre 20°C et 150°C, plus préférentiellement encore entre 40°C et 120°C. L'Homme de l'Art saura adapter la température de réaction en fonction des composés A et **B** mis en œuvre dans le procédé selon l'invention.

Avantageusement, le procédé de l'invention est mis en œuvre sous atmosphère inerte.

Dans le procédé selon l'invention, la quantité relative de composé **A** et de composé **B** peut être contrôlée de façon à assurer le taux de réaction des insaturations avec des fonctions hydrogénosilyles souhaité. Le rapport molaire **R** des fonctions hydrogénosilyles des composés **B** sur les fonctions alcènes et alcynes des composés **A** est compris entre 1:5 et 5:1, de façon préférée entre 1:3 et 3:1, et de façon plus préférée entre 1:2 et 2:1.

Selon un mode de réalisation du procédé selon l'invention, le rapport molaire **R** des fonctions hydrogénosilyles des composés **B** sur les fonctions alcènes et alcynes des composés **A** est strictement supérieur à 1. Les fonctions hydrogénosilyles sont alors en excès par rapport aux fonctions insaturées. Dans ce cas, le procédé d'hydrosilylation est alors qualifié de partiel, On peut également parler de fonctionnalisation partielle. La fonctionnalisation partielle peut être utilisée par exemple pour obtenir des huiles silicones avec des fonctions hydrogénosilyles et des fonctions époxy.

Selon un autre mode de réalisation, le rapport molaire des fonctions hydrogénosilyles des composés **B** sur les fonctions alcènes et alcynes des composés **A** est inférieur ou égal à 1. Les fonctions hydrogénosilyles sont alors en défaut par rapport aux fonctions insaturées.

Avantageusement, dans le procédé selon l'invention, la concentration molaire en composé **C** est de 0,01% à 10%, de préférence de 0,05% à 5%, et de façon plus préférée de 0,1% à 3% par rapport au nombre de mole total d'insaturations portées par le composé insaturé **A**.

Selon une autre variante, la quantité de cobalt mise en œuvre dans le procédé selon l'invention est comprise entre 20 et 1000 ppm massiques du milieu réactionnel, de préférence entre 20 et 600 ppm et encore plus préférentiellement entre 20 et 400 ppm. Par milieu réactionnel on entend ici la somme des composés **A, B, C** et éventuellement **E**, sans tenir compte de la présence éventuelle de solvant.

Lorsque le composé **E** est présent dans le procédé selon l'invention, le ratio molaire composé **E** sur cobalt est avantageusement compris entre 0,5 et 4, de préférence entre 0,8 et 3,5 et encore plus préférentiellement entre 1,5 et 3.

Selon une variante préférée, dans le procédé selon l'invention, on ne met pas en œuvre de composés à base de platine, palladium, ruthénium ou rhodium.

Selon un mode préféré de réalisation de l'invention, les composés **A** et **B** mis en œuvre sont choisis parmi les organopolysiloxanes tels que définis ci-dessus. Dans ce cas, un réseau en trois dimensions se forme, ce qui conduit au durcissement de la composition. La réticulation implique un changement physique progressif du milieu constituant la composition. Par conséquent, le procédé selon l'invention peut être utilisé pour obtenir des élastomères, des gels, des mousses etc. On obtient dans ce cas, un matériau silicone réticulé Y. On entend par « matériau silicone réticulé » tout produit à base de silicone obtenu par réticulation et/ou durcissement de compositions comprenant des organopolysiloxanes possédant au moins deux liaisons insaturées et des organopolysiloxanes possédant au moins trois motifs hydrogénosilylés. Le matériau silicone réticulé **Y** peut par exemple être un élastomère, un gel ou une mousse.

Toujours selon ce mode préféré de réalisation du procédé selon l'invention, où les composés **A** et **B** sont choisis parmi les organopolysiloxanes tels que définis ci-dessus, on peut mettre en œ uvre des additifs fonctionnels habituels dans les compositions silicones. Comme familles d'additifs fonctionnels usuels, on peut citer :

- les charges ;
- les promoteurs d'adhérence ;
- les inhibiteurs ou retardateurs de la réaction d'hydrosilylation ;
- les modulateurs d'adhérence ;
- les résines silicones ;

- les additifs pour augmenter la consistance ;
- les pigments ; et
- les additifs de tenue thermique, de tenue aux huiles ou de tenue au feu, par exemple les oxydes métalliques.

Les charges éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 $\mu$m (micromètres) et une surface spécifique BET supérieure à 30 $m^2/g$, de préférence comprise entre 30 et 350 m2/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 $\mu$m (micromètres) et une surface BET inférieure à 100 $m^2/g$. De façon pratique mais non limitative, les charges employées peuvent être un mélange de quartz et de silice. Les charges peuvent être traitées par tout produit approprié. Sur le plan pondéral, on préfère mettre en œuvre une quantité de charge comprise entre 1% et 50% en poids, de préférence entre 1% et 40% en poids par rapport à l'ensemble des constituants de la composition.

Les promoteurs d'adhésion sont largement utilisés dans les compositions silicones. Avantageusement, dans le procédé selon l'invention on peut mettre en œuvre un ou plusieurs promoteurs d'adhésion choisis parmi le groupe constitué par:

- les organosilanes alcoxylés contenant, par molécule, au moins un groupe alcényle en $C_2$-$C_8$, sélectionnés parmi les produits de formule générale suivante:

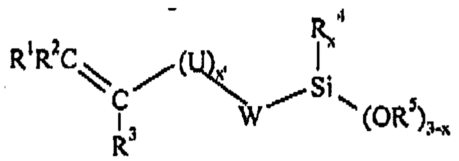

(D.1)

formule dans laquelle :

- $R^1$, $R^2$, $R^3$ sont des radicaux hydrogénés ou hydrocarbonés identiques ou différents entre eux et représentent un atome d'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$-$C_4$,
- W est un lien valentiel,
- $R^4$ et $R^5$ sont des radicaux identiques ou différents et représentent un alkyle en $C_1$-$C_4$ linéaire ou ramifié,
- x' = 0 ou 1, et
- x = 0 à 2.
- les composés organosiliciés comprenant au moins un radical époxy, choisis parmi :

a) les produits (D.2a) répondant à la formule générale suivante :

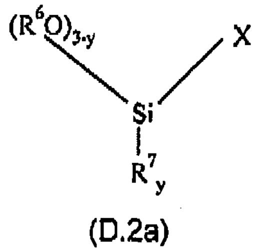

(D.2a)

formule dans laquelle :

- $R^6$ est un radical alkyle linéaire ou ramifié en $C_1$-$C_4$,
- $R^7$ est un radical alkyle linéaire ou ramifié en $C_1$-$C_4$,
- y est égal à 0, 1, 2 ou 3, et
- X étant défini par la formule suivante :

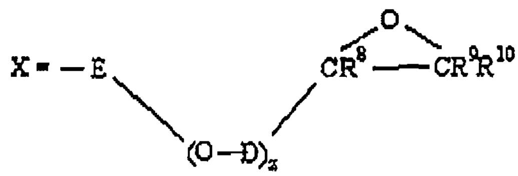

avec :
- E et D qui sont des radicaux identiques ou différents choisis parmi les alkyles en $C_1$-$C_4$ linéaires ou ramifiés,
- z qui est égal à 0 ou 1,
- $R^8$, $R^9$, $R^{10}$ qui sont des radicaux identiques ou différents représentant un atome d'hydrogène ou un alkyle linéaire ou ramifié en $C_1$-$C_4$, et
- $R^8$ et $R^9$ ou $R^{10}$ pouvant alternativement constituer ensemble et avec les deux carbones porteurs de l'époxy, un cycle alkyle ayant de 5 à 7 chaînons, ou

b) les produits (D.2b) constitués par des polydiorganosiloxanes époxyfonctionnels comportant :

(i) au moins un motif siloxyle de formule (D.2 bi) :

$$X_p G_q SiO_{\frac{4-(p+q)}{2}}$$

(D.2 bi)

formule dans laquelle :

- X est le radical tel que défini ci-dessus pour la formule (D.2 a)
- G est un groupe hydrocarboné monovalent choisi parmi les groupes alkyles ayant de 1 à 8 atomes de carbone inclus, éventuellement substitués par au moins un atome d'halogène, et ainsi que parmi les groupes aryles contenant entre 6 et 12 atomes de carbone,
- p = 1 ou 2,
- q = 0, 1 ou 2,
- p + q = 1, 2 ou 3 et

et (ii) éventuellement au moins un motif siloxyle de formule (D.2 bii)

$$G_r SiO_{\frac{4-r}{2}}$$

(D.2 bii)

formule dans laquelle :

- G a la même signification que ci-dessus et
- r est égal à 0, 1, 2 ou 3.

- les composés organosiliciés comprenant au moins une fonction hydrogénosilyle et au moins un radical époxy et
- les chélates de métal M et/ou les alcoxydes métalliques de formule générale :
  $M(OJ)_n$, dans laquelle

M est choisi dans le groupe formé par : Ti, Zr, Ge, Li, Mn, Fe, Al et Mg ou leurs mélanges n = valence de M et J = alkyle linéaire ou ramifié en $C_1$-$C_8$.
De préférence M est choisi dans la liste suivante : Ti, Zr, Ge, Li ou Mn, et encore plus préférentiellement le métal M est le Titane. On peut lui associer, par exemple, un radical alkoxy de type butoxy.

**Les résines silicone** sont des oligomères ou polymères organopolysiloxanes ramifiés bien connus et disponibles dans le commerce. Elles présentent, dans leur structure, au moins deux motifs différents choisis parmi ceux de formule $R_3SiO_{1/2}$ (motif M), $R_2SiO_{2/2}$ (motif D), $RSiO_{3/2}$(motif T) et $SiO_{4/2}$ (motif Q), l'un au moins de ces motifs étant un motif T ou Q.
Les radicaux R sont identiques ou différents et sont choisis parmi les radicaux alkyles linéaires ou ramifiés en C1 - C6, hydroxyle, phényle, trifluoro-3,3,3 propyle. On peut citer par exemple comme radicaux alkyles, les radicaux méthyle, éthyle, isopropyle, tertiobutyle et n-hexyle.
Comme exemples d'oligomères ou de polymères organopolysiloxanes ramifiés, on peut citer les résines MQ, les résines MDQ, les résines TD et les résines MDT, les fonctions hydroxyles pouvant être portées par les motifs M, D et/ou T. Comme exemple de résines qui conviennent particulièrement bien, on peut citer les résines MDQ hydroxylées ayant une teneur pondérale en groupe hydroxyle comprise entre 0,2 et 10 % en poids.

**Utilisation comme catalyseur**

L'invention concerne également l'utilisation d'un composé **C** de formule (1), (2) ou (3) tel que défini ci-dessus comme catalyseur d'hydrosilylation et/ou de silylation déshydrogénante entre un composé insaturé **A** et un composé **B** comprenant au moins une fonction hydrogénosilyle tels que définis ci-dessus.
Selon un mode de réalisation particulier, l'invention concerne également l'utilisation d'un composé **C** de formule (1), (2) ou (3) en présence d'un composé **E** de formule (4) tels que définis ci-dessus comme catalyseur d'hydrosilylation et/ou de silylation déshydrogénante entre un composé insaturé **A** et un composé **B** comprenant au moins une fonction hydrogénosilyle tels que définis ci-dessus.
Selon un mode de réalisation lorsque les composés **A** et **B** sont des organopolysiloxanes tels que définis ci-dessus, l'invention a également pour objet l'utilisation du composé **C** de formule (1), (2) ou (3) tel que défini ci-dessus, éventuellement en présence d'un composé **E** de formule (4) tel que défini ci-dessus, comme catalyseur de réticulation de compositions silicones.
Selon un mode de réalisation, le composé **C** et le composé **E** peuvent être mis en contact avant leur utilisation comme catalyseur d'hydrosilylation, de silylation déshydrogénante et/ou de réticulation de compositions silicones.

**Composition**

La présente invention a également pour objet, une composition **X** comprenant :

- au moins un composé insaturé **A** comprenant au moins une fonction alcène et/ou une fonction alcyne tel que défini ci-dessus
- au moins un composé **B** comprenant au moins une fonction hydrogénosilyle tel que défini ci-dessus et
- un composé **C** de formule (1), (2) ou (3) tel que défini ci-dessus.

Selon un mode de réalisation avantageux, la composition selon l'invention comprend également un composé **E** de formule (4) tel que défini ci-dessus.
Selon un autre mode de réalisation, la composition selon l'invention peut comprendre en outre un composé **C'** obtenu par réaction entre le composé **C** et le composé **E**.
Selon un autre mode de réalisation de l'invention, la composition **X** est une composition réticulable comprenant :

- au moins un composé organopolysiloxane **A** comportant, par molécule, au moins deux radicaux alcényles en $C_2$-$C_6$ liés à des atomes de silicium,
- au moins un composé organohydrogénopolysiloxane **B** comportant, par molécule, au moins deux atomes d'hydrogène liés à un atome de silicium identique ou différent,
- au moins un composé **C** tel que défini ci-dessus et
- éventuellement au moins un composé **E** tel que défini ci-dessus.

Selon un mode préféré de réalisation de l'invention, la composition **X** selon l'invention est une composition réticulable, dans laquelle :

a) le composé insaturé **A** est choisi parmi les composés organopolysiloxanes comportant des motifs de formule (I) :

$$Z_gU_hSiO_{(4-(g+h))/2} \quad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou 2, h = 0, 1 ou 2 et g+h =1, 2 ou 3 ;

et comportant éventuellement d'autres motifs de formule (II) :

$$U_lSiO_{(4-l)/2} \quad (II)$$

dans laquelle U a la même signification que ci-dessus, et i =0, 1, 2, ou 3.

b) le composé **B** est choisi parmi les organopolysiloxanes comprenant au moins un motif de formule (III) :

$$H_dU_eSiO_{(4-(d+e))/2} \quad (III)$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3 ;

et éventuellement d'autres motifs de formule (IV) :

$$U_fSiO_{(4-f)/2} \quad (IV)$$

dans laquelle U a la même signification que ci-dessus, et f =0,1, 2, ou 3.

Le composé **C** peut notamment être présent dans la composition **X** selon l'invention en une teneur allant de 0,01 à 7% molaire de cobalt par nombre de moles de radicaux alcényles en $C_2$-$C_6$ liés à des atomes de silicium du composé organopolysiloxane **A**, de préférence de 0,05 à 5%, et plus préférentiellement de 0,1 à 3%.

La composition **X** selon l'invention est de préférence exempte de catalyseur à base de platine, de palladium, de ruthénium ou de rhodium. Par « exempte » de catalyseur autre que le catalyseur **C**, on entend que la composition **X** selon l'invention comprend moins de 0,1% en poids de catalyseur autre que le catalyseur **C**, de préférence moins de 0,01% en poids, et plus préférentiellement moins de 0,001% en poids, par rapport au poids total de la composition.

Selon un mode particulier de réalisation, la composition **X** selon l'invention comprend également un ou plusieurs additifs fonctionnels habituels dans les compositions silicones. Comme familles d'additifs fonctionnels usuels, on peut citer :

- les charges ;
- les promoteurs d'adhérence ;
- les inhibiteurs ou retardateurs de la réaction d'hydrosilylation ;
- les modulateurs d'adhérence ;
- les résines silicones ;
- les additifs pour augmenter la consistance ;
- les pigments ; et
- les additifs de tenue thermique, de tenue aux huiles ou de tenue au feu, par exemple les oxydes métalliques.

Les compositions **X** selon l'invention peuvent notamment être obtenues en introduisant sous atmosphère inerte en premier lieu le composé **C** dans le milieu réactionnel, éventuellement suivi du composé **E**, puis en ajoutant le composé **A** sous agitation, Enfin, le composé **B** est introduit et la température du mélange est augmentée pour atteindre la température de réaction,

L'invention a également pour objet un matériau silicone réticulé **Y** obtenu par chauffage à une température allant de 15 à 200°C, de préférence de 20 à 150°C, et plus préférentiellement de 40 à 120°C, d'une composition **X** réticulable comprenant :

- au moins un composé organopolysiloxane **A** comportant, par molécule, au moins deux radicaux alcényles en $C_2$-$C_8$ liés à des atomes de silicium,
- au moins un composé organohydrogénopolysiloxane **B** comportant, par molécule, au moins deux atomes d'hydrogène liés à un atome de silicium identique ou différent,
- au moins un composé **C** tel que défini ci-dessus et
- éventuellement au moins un composé **E** tel que défini ci-dessus.

La présente invention est illustrée plus en détails dans les exemples de réalisation non limitatifs.

EXEMPLES

<u>Réactifs</u>

a)

A-1-octène origine Alfa Aesar : pureté 97%.
A-2 divinyltétraméthylsiloxane (DVTMS) avec 1,073 mole de radicaux vinyles liés au silicium pour 100 g de dvtms.
**A-3** organopolysiloxane de formule $M^{vi}D_{70}M^{vi}$ avec 0,038 mole de radicaux vinyle liés au silicium pour 100g, avec ; Vi= Vinyle ; $M^{vi}$: $(CH_3)_2ViSiO_{1/2}$ et D: $(CH_3)_2SiO_{2/2}$.

b)

**B-1** Organohydrogénopolysiloxane de formule **MD'M** avec M: $(CH_3)_3SiO_{1/2}$; et D': $(CH_3)HSiO_{2/2}$.
**B-2** Organohydrogénopolysiloxane de formule moyenne **MD'$_{50}$M** avec M et D' tels que ci-dessus.
**B-3** Organohydrogénopolysiloxane composé de motifs M, M', D et D' avec une teneur en SiH d'environ 20% massique.

c) Composés de cobalt de formules suivantes :

(C-1) Bis(triméthylsilyl)amidure de cobalt de formule $[Co(N(SiMe_3)_2)_2]_2$ produit commercial fournisseur : Strem, pureté 98%.
(C-2) Bis(triméthylsilyl)amidure de cobalt synthétisé à partir de $CoCl_2$ et $LiN(SiMe_3)_2$ et non purifié.
(C-3) Bis(triméthylsilyl)amidure de cobalt formé in-situ par ajout de $CoCl_2$ et $LiN(SiMe_3)_2$ dans le milieu réactionnel.

d) Autres composés

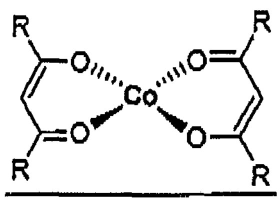

(D-1) = $[Co(TMHD)_2]$ quand R = tertiobutyle fournisseur : Alfa Aesar.
(D-2) = $[Co(acac)_2]$ quand R = Méthyle fournisseur : Sigma-Aldrich.
(D-3) Tris(triméthylsilyl)amidure de Lanthane de formule $La(N(SiMe_3)_2)_3$fournisseur : Strem.

e) Composés organiques **E**

**E1** : 2-(di-t-butylphosphinomethyl)pyridine fournisseur : Strem.

**E2** : 2,6-Bis(di-t-butylphosphinomethyl)pyridine fournisseur : Strem.
**E3** : 1,10-Phenantroline fournisseur : Strem.

**1/ Hydrosilylation de l'octène par le MD'M**

Mode opératoire

Pour l'ensemble des essais, le catalyseur est pesé et introduit dans un flacon de verre sous atmosphère inerte en boîte à gants. On ajoute ensuite toujours sous atmosphère inerte le 1-octène puis le composé comprenant une liaison hydrogénosilyle (MD'M). Le flacon est placé sous agitation dans un bain d'huile qui sera chauffé à la température de réaction souhaitée.

Le ratio **R** correspond pour ces essais au nombre de moles de MD'M sur le nombre de moles d'octène et la concentration en catalyseur est exprimée en % molaire de catalyseur par rapport au nombre de liaisons alcènes.

Le milieu réactionnel est analysé par chromatographie en phase gaz (CPG).

Pour la réaction d'hydrosilylation de l'octène, l'activité du catalyseur est déterminée quantitativement par CPG à partir de la conversion du 1-octène. Les sélectivités en produits de réaction sont exprimées en % aire par rapport à l'aire totale des produits formés déterminés par GPC et GPC-MS,

Comparaison du $[Co(N(SiMe_3)_2)_2]_2$ à d'autres catalyseurs de l'art antérieur pour l'hydrosilylation du 1-octène

Le ratio R correspondant au rapport molaire de l'organohydrogénopolysiloxane (MD'M) sur le 1-octène est de 1 :1. La concentration en catalyseur est de 0,5% molaire par rapport au mol de 1-octène. Les résultats sont présentés dans le tableau 1 suivant

Tableau 1 : Hydrosilylation du 1-octène par le MD'M

| Essai | 1 Invention | 2 Comparatif | 3 Comparatif | 4 Comparatif |
|---|---|---|---|---|
| Catalyseur | **(C-1)** $[Co(N(SiMe_3)_2)_2]_2$ | **(D-2)** $Co(acac)_2$ | **(D-1)** $Co(TMHD)_2$ | **(D-3)** $La(N(SiMe_3)_2)_3$ |
| Temperature (°C) | 75 | 90 | 90 | 90 |
| Taux de conversion octène à t=24h (%) | 100 | 18 | 14 | 0 |
| | Sélectivités (%) à t=24h | | | |
| Hydrosilylation | 42 | 0 | 10 | 0 |
| Silylation déshydrogénante | 7 | 3,8 | 9 | 0 |
| Isomérisation 1-octène | 45 | 4,6 | 12 | 0 |
| Dimérisation 1-octène | 0 | 26 | 9 | 0 |

Le bis(triméthylsilyl)amidure de cobalt est le composé le plus efficace comme catalyseur d'hydrosilylation. A 75°C, la conversion totale de l'octène a lieu dès 4h, alors qu'avec les deux autres composés du cobalt elle est inférieure à 20% après 24h de réaction à 90°C. Avec le tris(triméthylsilyl)amidure de lanthane, aucune conversion n'est observée.

Le catalyseur selon l'invention conduit également à la meilleure sélectivité en produit d'hydrosilylation (49%) versus 0% et 10% respectivement pour les essais comparatifs 2 et 3.

Le tableau 2 suivant présente les résultats obtenus avec les différents bis(triméthylsilyl)amidure de cobalt qu'ils soient commerciaux, synthétisés au laboratoire ou formés in-situ dans le milieu réactionnel. Le ratio R correspondant au rapport molaire de l'organohydrogénopolysiloxane (MD'M) sur le 1-octène est de 1 :1 et la concentration en catalyseur est de 0,5% molaire par rapport au mol de 1-octène.

Pour l'essai 5, le $Co(N(SiMe_3)_2)_2$ **(C-2)** a été synthétisé par réaction entre $CoCl_2$ et $LiN(SiMe_3)_2$ dans le diéthyl ether. En fin de réaction le diéthyl éther a été évaporé sous vide. Le produit de réaction non purifié comprenant les sels LiCl a été utilisés tel quel.

Pour l'essai 6, le $Co(N(SiMe_3)_2)_2$ **(C-3)** a été formé in-situ par ajout de la quantité équimolaire de $CoCl_2$ et $LiN(SiMe_3)_2$ dans le milieu réactionnel,

Tableau 2

| Essai | 1 Invention | 5 Invention | 6 Invention |
|---|---|---|---|
| Catalyseur | **(C-1)** | **(C-2)** | **(C-3)** |
| Température (°C) | 75 | 75 | 75 |
| Taux de conversion octène à t=24h (%) | 100 | 100 | 98 |
| | Sélectivités (%) | | |
| Hydrosilylation | 42 | 37 | 41 |
| Silylation déshydrogénante | 7 | 5 | 10 |
| Isomérisation 1-octène | 45 | 52 | 43 |
| Dimérisation 1-octène | 0 | 0 | 5 |

Le produit de réaction de $CoCl_2$ et $LiN(SiMe_3)_2$ non purifié ou l'ajout direct dans le milieu réactionnel de $CoCl_2$ et $LiN(SiMe_3)_2$ permettent d'obtenir une activité et sélectivité comparable à celle du $[Co(N(SiMe_3)_2)_2]_2$ commercial,

Ajout de composé organique

Dans les mêmes conditions opératoires que les essais précédents, un composé **E1** qui est le 2-(di-t-butylphosphinomethyl)pyridine a été ajouté dans le milieu réactionnel après le cobalt bis amidure. Le ratio molaire entre le composé **E1** et le cobalt est indiqué dans le tableau 3 suivant.

Tableau 3

| Essai | 1 Invention | 7 Invention | 5 Invention | 8 Invention | 6 Invention | 9 Invention |
|---|---|---|---|---|---|---|
| Catalyseur | **(C-1)** | **(C-1)** | **(C-2)** | **(C-2)** | **(C-3)** | **(C-3)** |
| Ratio molaire **E1/Co** | 0 | 1 | 0 | 1 | 0 | 1 |
| Température (°C) | 75 | 75 | 75 | 75 | 75 | 75 |
| Temps pour atteindre 95% conversion octène (h) | 2 | 0,5 | ND | 0,5 | ND | 0,5 |
| Conversion octène à t=24h (%) | 100 | 99 | 100 | 99 | 98 | 98 |
| | Sélectivités (%) | | | | | |
| Hydrosilylation | 42 | 90 37 | | 87 | 41 | 84 |
| Silylation déshydrogénante | 7 | 1 | 5 | 2 | 10 | 1 |
| Isomérisation 1-octène | 45 | 5 | 52 | 10 | 43 | 13 |
| Dimérisation alcène | 0 | 0 | 0 | 0 | 5 | 5 |

L'ajout du composé **E1** permet de convertir l'octène quatre fois plus rapidement. De plus, la sélectivité en produit d'hydrosilylation est fortement améliorée quel que soit la nature du bis(triméthylsilyl)amidure de cobalt mis en œuvre.

**Ajout d'un réducteur**

Nous avons mesuré l'impact de l'ajout d'un réducteur tel que le $NaHBEt_3$. Le réducteur est ajouté après le catalyseur et le composé E1 mais avant les réactifs. La concentration en catalyseur est de 0,5% molaire par rapport au mol de 1-octène. Les résultats sont présentés dans le tableau 4 suivant.

Tableau 4

| Essai | 1 Invention | 7 Invention | 10 Comparatif |
|---|---|---|---|
| Catalyseur | **(C-1)** | **(C-1)** | **(C-1)** |
| Ratio molaire **E1/Co** | 0 | 1 | 1 |
| Nbre mol de $NaHBEt_3$/Co | 0 | 0 | 2 |
| Température (°C) | 75 | 75 | 75 |
| Temps pour atteindre 95% conversion octène (h) | 2 | 0,5 | 0,5 |
| Conversion octène à t=24h (%) | 100 | 99 | 100 |
| | Sélectivités (%) à t=24h | | |
| Hydrosilylation | 42 | 90 | 79 |
| Silylation déshydrogénante | 7 | 1 | 1 |
| Isomérisation 1-octène | 45 | 5 | 14 |
| Dimérisation alcène | 0 | 0 | 3 |

L'ajout de réducteur n'augmente pas la réactivité du système.

**2/ Hydrosilylation du divinyltetramethyldisiloxane (DVTMS) par le MD'M**

Mode opératoire

Les essais ont lieu de façon identique aux précédents en remplaçant le 1-octène par le divinyltetramethyldisiloxane (DVTMS). Pour l'ensemble des essais, la concentration en catalyseur C-1 est de 0,5% molaire par rapport au nombre de moles de fonctions vinyle.

Tableau 5

| Essai | 11 Invention | 12 Invention | 13 Invention |
|---|---|---|---|
| Ratio molaire **E1/Co** | **0** | **1** | **0** |
| Temperature (°C) | 75 | 75 | 75 |
| Ratio molaire R SiH:SiVi | 1 | 1 | 2 |
| Conversion dvtms à t=24h (%) | 100 | 100 | 100 |
| Temps pour atteindre 95% conversion DVTMS (h) | 4 | 0,5 | 1 |
| | Sélectivités (%) | | |
| Hydrosilylation | **23** | **31** | **32** |
| Silylation déshydrogénante | 46 | 55 | 43 |

Le bis(triméthylsilyl)amidure de cobalt catalyse l'hydrosilylation et la silylation déshydrogénante du dvtms. L'ajout du composé **E1** accélère de façon importante la réaction. Le temps nécessaire pour convertir 95% du DVTMS est divisé par 8. En revanche, l'ajout de composé **E1** ne semble pas avoir beaucoup d'impact sur la sélectivité.

L'augmentation du ratio molaire **R** SiH :SiVi de 1 à 2 permet de diminuer par quatre le temps nécessaire pour convertir 95% de l'octène.

**3/** Réticulation de compositions **silicones** : réaction entre l'organopolysiloxane vinylé **A-3** de formule $M^{vI}D_{70}M^{vI}$ et l'organopolysiloxane hydrogéné **B-2** de formule moyenne $MD'_{50}M$.

Mode opératoire :

Les différents catalyseurs testés sont pesés en boîte à gants, dans un pilulier fermé. On ajoute ensuite éventuellement le composé **E1.** Puis on introduit l'organopolysiloxane vinylé **A-3** et on agite 15 minutes à température ambiante. Ensuite l'organopolysiloxane hydrogéné **B-2** est ajouté puis on chauffe à la température souhaitée et on maintien sous agitation via un barreau magnétique.

Le début de réticulation défini comme étant le temps nécessaire pour l'arrêt de l'agitation dû à une augmentation de la viscosité du milieu est mesuré.

Pour l'ensemble des essais, sauf indication contraire dans les tableaux, le ratio molaire R Si-H :Si-Vi est de 2 :1 et la concentration en catalyseur est de 1% molaire par rapport au nombre de moles de radicaux vinyles liés au silicium soit environ 260 ppm massiques de cobalt dans le milieu réactionnel.

Tableau 6

| Essai | 14 Invention | 15 Invention | 16 Comparatif | 17 Comparatif |
|---|---|---|---|---|
| Catalyseur | **(C-1)** | **(A-1)** | $Co(acac)_2$ | $La(N(SiMe_3)_2)_3$ |
| Composé E1 Equivalents **E1**/Co | Non | 2 | Non | Non |
| Temperature (°C) | 90 | 90 | 110 | 110 |
| Temps arrêt agitation TAA | 40 min | 20 min | 40 min | Pas de réticulation après 48 h |

Le bis(triméthylsilyl)amidure de cobalt est un bon catalyseur de réticulation de compositions silicones. L'ajout du composé E1 permet d'accélérer la réticulation.

L'ajout d'autres composés organiques E2 et E3 ont été testés dans les mêmes conditions. Les résultats sont présentés dans le tableau 7 suivant.

Tableau 7

| Essai | 14 Invention MP91-1 | 15 Invention MP9S-4 | 16 Comparatif MP91-2 | 17 Comparatif MP91-4 |
|---|---|---|---|---|
| Catalyseur | **(C-1)** | **(C-1)** | **(C-1)** | **(C-1)** |
| Nature du composé **E** | Aucun | **E1**=PN | **E2**=PNP | **E3=** 1,10-Phenantroline |
| Equivalents molaire E/Co | 0 | 2 | 1,8 | 2,1 |
| Temperature (°C) | 90 | 90 | 90 | 90 |
| Temps arrêt agitation TAA | 40 min | 20 min | Pas d'arrêt d'agitation en 24H | Pas d'arrêt d'agitation en 24H |

Les composés **E2** et **E3** ont un effet néfaste sur le catalyseur de réticulation. Il n'est pas possible de mesurer un temps d'arrêt d'agitation au bout de 24h. En revanche, l'ajout de composé **E1** permet d'augmenter l'activité du catalyseur en diminuant de 50% le temps nécessaire pour obtenir une réticulation suffisant pour arrêter l'agitation.

Le tableau 8 suivant permet de voir l'impact de la teneur en composé **E1** utilisée. Pour ces essais, la température est fixée à 70°C, le catalyseur est le bis(triméthylsilyl)amidure de cobalt **C-1**, le ratio molaire **R** Si-H :Si-Vi est de 2 :1 et la concentration en catalyseur est de 1% molaire par rapport au nombre de moles de radicaux vinyles liés au silicium soit 260 ppm massiques de cobalt dans le milieu réactionnel.

Tableau 8

| Essai | 18 Invention | 19 Invention | 20 Invention | 21 Invention |
|---|---|---|---|---|
| Equivalents **E1**/Co | 0 | 1 | 2 | 3 |
| Temps arrêt agitation TAA | 2h15min | 2h | 1h20min | 1h30min |

A 70°C, l'ajout de composé **E1** permet de diminuer le temps nécessaire pour obtenir l'arrêt de l'agitation. L'optimum semble atteint pour un ratio molaire composé **E1**: Cobalt égal à 2.

Impact de la température avec et sans aiout de composé **E1**

Pour ces essais, le catalyseur est le bis(triméthylsilyl)amidure de cobalt C-1, le ratio molaire **R** Si-H :Si-Vi est de 2 :1 et la concentration en catalyseur est de 1% molaire par rapport au nombre de moles de radicaux vinyles liés au silicium soit 260 ppm massiques de cobalt dans le milieu réactionnel.

Tableau 9

| Essai | 22 Invention | 23 Invention | 14 Invention | 15 Invention | 24 Invention | 25 Invention |
|---|---|---|---|---|---|---|
| Temperature (°C) | 30 | | 90 | | 110 | |
| Equivalents **E1**/Co | 0 | 2 | 0 | 2 | 0 | 2 |
| Temps arrêt agitation TAA | 115 h | 20 h | 40 min | 20 min | <10 min | <10 min |

A 30, 70 et 90°C, l'impact du composé **E1** sur l'activité du système catalytique est significatif. Notamment à température ambiante où la réticulation a lieu en moins de 24 h en présence du composé **E1** alors que sans composé **E1** il faut pratiquement 5 jours.
Aux plus hautes températures (110°C) l'impact sur l'activité de l'ajout du composé **E1** n'a pas été mis en évidence car le test n'est pas suffisamment adapté.

Impact de la concentration en catalyseur et du ratio molaire Si-H :Si-Vi à T=90°C

Tableau 10

| Essai | 26 Invention | 27 Invention | 14 Invention | 28 Invention | 15 Invention | 29 Invention |
|---|---|---|---|---|---|---|
| catalyseur (% mol*) | 1 | 1 | 1 | 1 | 1 | 0.5 |
| Ajout composé E1 (equiv/Co) | non | non | non | 1,4 | 2 | 1.4 |
| ppm Co | 240 | 240 | 260 | 230 | 230 | 130 |
| ratio molaire R Si-H:Si-Vi | 4:1 | 2,8:1 | 2:1 | 3,8:1 | 2:1 | 2.5:1 |
| Temps arrêt agitation TAA | 25 min | 30 min | 40 min | 15 min | 20 min | 45 min |
| *par rapport au nombre de moles de fonctions vinyle | | | | | | |

L'ajout de composé **E1** conduit à une réticulation plus rapide quel que soit le ratio **R** SiH : SiVi testé.
En absence de composé **E**1, l'augmentation du ratio **R** SiH :SiVi conduit à une augmentation de la vitesse de réticulation du mélange,

Impact de la nature de l'organohydrogénopolysiloxane

L'essai 14 a été refait en remplaçant l'organohydrogénopolysiloxane **B-2** par **B-3**. Les conditions de l'essai sont inchangées par ailleurs. Le tableau 11 suivant montre que la réticulation de la composition a lieu.

Tableau 11

| Essai | 14 Invention | 30 Invention |
|---|---|---|
| Catalyseur | C-1 | C-1 |
| Huile SiH | B-2 | 8-3 |
| Température | 90°C | 90°C |
| Temps arrêt agitation TAA | 40 min | 1h45 |

## Revendications

1. Procédé pour préparer des produits d'hydrosilylation et/ou de silylation déshydrogénante par réaction entre un composé insaturé A comprenant au moins une fonction alcène et/ou au moins une fonction alcyne, avec un composé B comprenant au moins une fonction hydrogénosilyle, ledit procédé étant **caractérisé par le fait qu'**il est catalysé par un composé du cobalt C de formule (1) :

$$[Co(N(SiR_3)_2)_x]_y \qquad (1)$$

dans laquelle :

- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone, les groupes cycloalkyles ayant de 3 à 8 atomes de carbone et les groupes aryles ayant de 6 à 12 atomes de carbone,
- x=1, 2 ou 3 et
- y=1 ou 2.

2. Procédé selon la revendication 1 dans lequel le composé C a pour formule (2):

$$[Co(N(SiR_3)_2)_2]_y \qquad (2)$$

dans laquelle :

- Co représente le cobalt au degré d'oxydation II
- les symboles R, identiques ou différents, représentent un atome d'hydrogène ou un radical hydrocarboné ayant de 1 à 12 atomes de carbone, et de préférence les symboles R, identiques ou différents, sont choisis dans le groupe constitué par : l'atome d'hydrogène, les groupes alkyles ayant de 1 à 8 atomes de carbone, les groupes cycloalkyles ayant de 3 à 8 atomes de carbone et les groupes aryles ayant de 6 à 12 atomes de carbone et
- y=1 ou 2.

3. Procédé selon la revendication 1 dans lequel le composé C a pour formule (3):

$$[Co(N(Si(CH_3)_3)_2)_2]_y \qquad (3)$$

dans laquelle :

- Co représente le cobalt au degré d'oxydation II et
- y=1 ou 2.

4. Procédé selon l'une quelconque des revendications précédentes mis en œuvre en présence d'un composé E de formule (4) suivante :

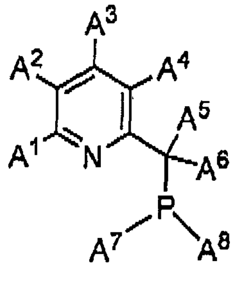
(4)

dans laquelle :

- $A^1$, $A^2$, $A^3$ et $A^4$ sont choisis parmi : l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les halogènes et les groupes alkoxy de formule $OR^1$ où $R^1$ est un groupe alkyle ayant de

1 à 8 atomes de carbone.
- $A^5$ et $A^6$ sont choisis parmi : l'atome d'hydrogène, les groupes alkyle ayant de 1 à 8 atomes de carbone, les groupes cycloalkyles ayant de 6 à 12 atomes de carbone et les groupes aryles ayant de 6 à 12 atomes de carbone et
- $A^7$ et $A^8$ sont choisis parmi : les groupes alkyles ayant de 1 à 8 atomes de carbone, les groupes cycloalkyles ayant de 6 à 12 atomes de carbone, les groupes aryles ayant de 6 à 12 atomes de carbone et les groupes alkoxy de formule $OR^1$ où $R^1$ est un groupe alkyle ayant de 1 à 8 atomes de carbone.

**5.** Procédé selon la revendication 4 dans lequel

- $A^1$, $A^2$, $A^3$ et $A^4$ sont des atomes d'hydrogène,
- $A^5$ et $A^6$ sont des atomes d'hydrogène,
- $A^7$ et $A^8$ sont choisis parmi : les groupes alkyles ayant de 1 à 8 atomes de carbone, les groupes cycloalkyles ayant de 6 à 12 atomes de carbone, les groupes aryles ayant de 6 à 12 atomes de carbone et les groupes alkoxy de formule $OR^1$ où $R^1$ est un groupe alkyle ayant de 1 à 8 atomes de carbone et de préférence $A^7$ et $A^8$ sont choisis parmi les groupes tertiobutyle, isopropyle, méthyle, éthyle, phényle et cyclohexyle.

**6.** Procédé selon l'une quelconque des revendications 1 à 3 dans lequel la concentration molaire en composé C est de 0,01% à 10%, de préférence de 0,05% à 5%, et de façon plus préférée de 0,1% à 3% par rapport au nombre de mole total d'insaturations portées par le composé insaturé A.

**7.** Procédé selon les revendications 4 ou 5 dans laquelle le ratio molaire du composé E sur cobalt est compris entre 0,5 et 4, de préférence entre 0,8 et 3,5 et encore plus préférentiellement entre 1,5 et 3.

**8.** Procédé selon l'une des revendications précédentes **caractérisé en ce qu'**il ne met pas en œuvre de composés à base de platine, palladium, ruthénium ou rhodium.

**9.** Procédé selon la revendication 1 dans lequel le composé insaturé A comprend de 2 à 40 atomes de carbone et une ou plusieurs fonctions alcène ou alcyne.

**10.** Procédé selon la revendication 1 dans lequel le composé B comprenant au moins une fonction hydrogénosilyle est choisi parmi le groupe constitué par:

- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyle, et
- un polymère organique comprenant des fonctions hydrogénosilyles en positions terminales.

**11.** Procédé selon la revendication 1 dans lequel :

a) le composé insaturé A est choisi parmi les composés organopolysiloxanes comportant des motifs de formule (I) :

$$Z_gU_hSiO_{(4-(g+h))/2} \qquad (I)$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou 2, h = 0, 1 ou 2 et g+h =1, 2 ou 3 :

et comportant éventuellement d'autres motifs de formule (II) :

$$U_lSiO_{(4-l)/2} \qquad (II)$$

dans laquelle U a la même signification que ci-dessus, et i =0, 1, 2, ou 3, et
b) le composé B est un organopolysiloxane comprenant au moins un motif de formule (III) :

$$H_dU_eSiO_{(4-(d+e))/2} \quad \text{(III)}$$

dans laquelle :

- les radicaux U, identiques ou différents, représentent un radical hydrocarboné ayant de 1 à 12 atomes de carbone,
- d =1 ou 2, e =0, 1 ou 2 et d+e =1, 2 ou 3;

et éventuellement d'autres motifs de formule (IV) :

$$U_fSiO_{(4-f)/2} \quad \text{(IV)}$$

dans laquelle U a la même signification que ci-dessus, et f =0,1, 2, ou 3.

**12.** Utilisation d'un composé C tel que défini dans les revendications 1 à 3 comme catalyseur d'hydrosilylation et/ou de silylation déshydrogénante entre un composé insaturé A et un composé B comprenant au moins une fonction hydrogénosilyle.

**13.** Utilisation d'un composé C tel que défini dans les revendications 1 à 3 en présence d'un composé E tel que défini selon les revendications 4 et 5, comme catalyseur d'hydrosilylation et/ou de silylation déshydrogénante entre un composé insaturé A et un composé B comprenant au moins une fonction hydrogénosilyle.

**14.** Composition X comprenant :

- au moins un composé insaturé A comprenant au moins une fonction alcène et/ou une fonction alcyne,
- au moins un composé B comprenant au moins une fonction hydrogénosilyle et
- un composé C tel que défini dans les revendications 1 à 3.

**15.** Composition X selon la revendication 14 comprenant en outre un composé E tel que défini selon les revendications 4 ou 5.

**16.** Composition X réticulable selon la composition 14 comprenant :

- au moins un composé organopolysiloxane A comportant, par molécule, au moins deux radicaux alcényles en $C_2$-$C_8$ liés à des atomes de silicium,
- au moins un composé organohydrogénopolysiloxane B comportant, par molécule, au moins deux atomes d'hydrogène liés à un atome de silicium identique ou différent,
- au moins un composé C tel que défini dans les revendications 1 à 3 et
- éventuellement au moins un composé E tel que défini selon les revendications 4 ou 5.

**17.** Composition X réticulable selon la revendication 16 dans laquelle :

a) le composé insaturé A est choisi parmi les composés organopolysiloxanes comportant des motifs de formule (I) :

$$Z_gU_hSiO_{(4-(g+h))/2} \quad \text{(I)}$$

dans laquelle :

- les radicaux Z, identiques ou différents, représentent un radical alcényle ou alcynyle, linéaire ou ramifié, ayant de 2 à 6 atomes de carbone ;
- les radicaux U, identiques ou différents, représentent un radical hydrocarboné ayant de 1 à 12 atomes de carbone,
- g = 1 ou 2, h = 0, 1 ou 2 et g+h =1, 2 ou 3 ;

et comportant éventuellement d'autres motifs de formule (II) :

$$U_lSIO_{(4-l)/2} \quad (II)$$

dans laquelle U a la même signification que ci-dessus, et i =0, 1, 2, ou 3 et
b) le composé B est choisi parmi les organopolysiloxanes comprenant au moins un motif de formule (III) :

$$H_dU_eSiO_{(4-(d+e))/2} \quad (III)$$

dans laquelle :

- les radicaux U, identiques ou différents, représentent un radical hydrocarboné ayant de 1 à 12 atomes de carbone,
- d =1 ou2, e =0, 1 ou 2 et d+e=1, 2 ou 3 ;

et éventuellement d'autres motifs de formule (IV) :

$$U_fSiO_{(4-f)/2} \quad (IV)$$

dans laquelle U a la même signification que ci-dessus, et f =0,1, 2, ou 3.

**18.** Matériau silicone réticulé Y obtenu par chauffage à une température allant de 15 à 200°C, de préférence de 20 à 150°C, et plus préférentiellement de 40 à 120°C, d'une composition X réticulable selon la revendication 16 ou 17.

## Patentansprüche

**1.** Verfahren zur Herstellung von Produkten einer Hydrosilylierung und/oder wasserstoffabspaltenden Silylierung, indem eine Reaktion zwischen einer ungesättigten Verbindung **A,** welche mindestens eine Alkenfunktion und/oder mindestens eine Alkinfunktion umfasst, mit einer Verbindung **B** erfolgt, welche mindestens eine Hydrogenosilylfunktion umfasst, wobei das Verfahren **dadurch gekennzeichnet ist, dass** es durch eine Kobaltverbindung **C** der Formel (1) katalysiert wird

$$[Co(N(SiR_3)_2)_x]_y \quad (1)$$

wobei:

- die Formelzeichen R, welche vollkommen gleichartig oder verschiedenartig sind, für ein Wasserstoffatom oder einen Kohlenwasserstoffrest mit 1 bis 12 Kohlenstoffatomen stehen, wobei die Formelzeichen R, welche vollkommen gleichartig oder verschiedenartig sind, vorzugsweise aus der Gruppe ausgewählt sind, die aus Folgendem besteht: einem Wasserstoffatom, den Alkylgruppen mit 1 bis 8 Kohlenstoffatomen, den Cycloalkylgruppen mit 3 bis 8 Kohlenstoffatomen sowie den Arylgruppen mit 6 bis 12 Kohlenstoffatomen,
- x = 1, 2 oder 3 und
- y = 1 oder 2.

**2.** Verfahren nach Anspruch 1, wobei die Verbindung C die Formel (2) aufweist:

$$[Co(N(SiR_3)_2)_2]_y \quad (2)$$

wobei:

- Co für Kobalt der Oxidationsstufe II steht
- die Formelzeichen R, welche vollkommen gleichartig oder verschiedenartig sind, für ein Wasserstoffatom oder einen Kohlenwasserstoffrest mit 1 bis 12 Kohlenstoffatomen stehen, wobei die Formelzeichen R, welche vollkommen gleichartig oder verschiedenartig sind, vorzugsweise aus der Gruppe ausgewählt sind, die aus einem Wasserstoffatom, den Alkylgruppen mit 1 bis 8 Kohlenstoffatomen, den Cycloalkylgruppen mit 3 bis 8 Kohlenstoffatomen sowie den Arylgruppen mit 6 bis 12 Kohlenstoffatomen besteht, und
- Y = 1 oder 2.

**3.** Verfahren nach Anspruch 1, wobei die Verbindung C die Formel (3) aufweist:

$$(Co(N(Si(CH_3)_3)_2)_2]_y \qquad (3)$$

wobei:

- Co für Kobalt der Oxidationsstufe II steht und
- Y = 1 oder 2.

**4.** Verfahren nach einem beliebigen der vorhergehenden Ansprüche, das in Gegenwart einer Verbindung **E** der folgenden Formel (4) durchgeführt wird:

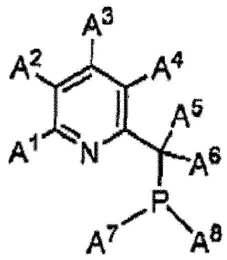

(4)

wobei:

- $A^1$, $A^2$, $A^3$ und $A^4$ aus Folgendem ausgewählt sind: einem Wasserstoffatom, den Alkylgruppen mit 1 bis 8 Kohlenstoffatomen, den Cycloalkylgruppen mit 6 bis 12 Kohlenstoffatomen, den Arylgruppen mit 6 bis 12 Kohlenstoffatomen, den Halogenen und den Alkoxygruppen der Formel $OR^1$, wobei $R^1$ eine Alkylgruppe mit 1 bis 8 Kohlenstoffatomen ist,
- $A^5$ und $A^6$ aus Folgendem ausgewählt sind: einem Wasserstoffatom, den Alkylgruppen mit 1 bis 8 Kohlenstoffatomen, den Cycloalkylgruppen mit 6 bis 12 Kohlenstoffatomen und den Arylgruppen mit 6 bis 12 Kohlenstoffatomen sowie
- $A^7$ und $A^8$ aus Folgendem ausgewählt sind: den Alkylgruppen mit 1 bis 8 Kohlenstoffatomen, den Cycloalkylgruppen mit 6 bis 12 Kohlenstoffatomen, den Arylgruppen mit 6 bis 12 Kohlenstoffatomen und den Alkoxygruppen der Formel $OR^1$, wobei $R^1$ eine Alkylgruppe mit 1 bis 8 Kohlenstoffatomen ist.

**5.** Verfahren nach dem Anspruch 4, wobei:

- $A^1$, $A^2$, $A^3$ und $A^4$ Wasserstoffatome sind,
- $A^5$ und $A^6$ Wasserstoffatome sind,
- $A^7$ und $A^8$ aus Folgendem ausgewählt sind: den Alkylgruppen mit 1 bis 8 Kohlenstoffatomen, den Cycloalkylgruppen mit 6 bis 12 Kohlenstoffatomen, den Arylgruppen mit 6 bis 12 Kohlenstoffatomen und den Alkoxygruppen der Formel $OR^1$, wobei $R^1$ eine Alkylgruppe mit 1 bis 8 Kohlenstoffatomen ist, wobei $A^7$ und $A^8$ vorzugsweise aus den Gruppen tert.-Butyl, Isopropyl, Methyl, Ethyl, Phenyl und Cyclohexyl ausgewählt sind.

**6.** Verfahren nach einem beliebigen der Ansprüche 1 bis 3, wobei die molare Konzentration an Verbindung **C** 0,01 % bis 10 %, vorzugsweise 0,05 % bis 5 % und stärker bevorzugt 0,1 % bis 3 % beträgt, bezogen auf die Gesamtmolanzahl an ungesättigten Stellen, mit welchen die ungesättigte Verbindung **A** versehen ist.

**7.** Verfahren nach des Ansprüchen 4 oder 5, wobei das Molverhältnis der Verbindung **E** zu Kobalt im Bereich von 0,5 bis 4, vorzugsweise von 0,8 bis 3,5 und noch stärker bevorzugt von 1,5 bis 3 liegt.

**8.** Verfahren nach einem der vorhergehenden Ansprüche, **dadurch gekennzeichnet, dass** dabei keinerlei Verbindungen auf Basis von Platin, Palladium, Ruthenium oder Rhodium zum Einsatz kommen.

**9.** Verfahren nach Anspruch 1, wobei die ungesättigte Verbindung **A** 2 bis 40 Kohlenstoffatome und eine oder mehrere

Alken- oder Alkinfunktionen umfasst.

**10.** Verfahren nach Anspruch 1, wobei die Verbindung **B** mindestens eine Hydrogenosilylfunktion umfasst, die aus der Gruppe ausgewählt ist, welche aus Folgendem besteht:

- einer Silan- oder Polysilanverbindung, die mindestens ein Wasserstoffatom umfasst, welches an ein Siliciumatome gebunden ist,
- einer Organopolysiloxanverbindung, die mindestens ein Wasserstoffatom umfasst, das an ein Siliciumatom gebunden ist, vorzugsweise eine Organopolysiloxanverbindung, die pro Molekül mindestens zwei Hydrogenosilylfunktionen umfasst, und
- einem organischen Polymer, das endständige Hydrogenosilylfunktionen umfasst.

**11.** Verfahren nach dem Anspruch 1, wobei:

a) die ungesättigte Verbindung **A** aus den Organopolysiloxanverbindungen ausgewählt ist, die Bausteine der Formel (I) aufweisen:

$$Z_gU_hSiO_{(4-(g+h))/2} \qquad (I)$$

wobei:

- die Reste Z, welche vollkommen gleichartig oder verschiedenartig sind, für einen Alkenyl- oder Alkinylrest geradkettiger oder verzweigter Art mit 2 bis 6 Kohlenstoffatomen stehen;
- die Reste U, welche vollkommen gleichartig oder verschiedenartig sind, für einen Kohlenwasserstoffrest mit 1 bis 12 Kohlenstoffatomen stehen,
- g = 1 oder 2, h = 0, 1 oder 2 und g+h = 1, 2 oder 3 ist;

und die möglicherweise weitere Bausteine der Formel (II) aufweist:

$$U_iSiO_{(4-i)/2} \qquad (II)$$

wobei U dieselbe Bedeutung wie oben hat und i = 0, 1, 2 oder 3 ist, und
b) die Verbindung **B** ein Organopolysiloxan ist, welches mindestens einen Baustein der Formel (III) umfasst:

$$H_dU_eSiO_{(4-(d+e))/2} \qquad (III)$$

wobei:

- die Reste U, welche vollkommen gleichartig oder verschiedenartig sind, für einen Kohlenwasserstoffrest mit 1 bis 12 Kohlenstoffatomen stehen,
- d = 1 oder 2, e = 0, 1 oder 2 und d+e = 1, 2 oder 3 ist;

sowie möglicherweise weitere Bausteine der Formel (IV):

$$U_fSiO_{(4-f)/2} \qquad (IV)$$

wobei U dieselbe Bedeutung wie oben hat und f = 0, 1, 2 oder 3 ist.

**12.** Verwendung einer Verbindung **C** gemäß der Begriffsbestimmung in den Ansprüche 1 ä 3 als Katalysator einer Hydrosilylierung und/oder wasserstoffabspaltenden Silylierung zwischen einer ungesättigten Verbindung A und einer Verbindung B, die mindestens eine Hydrogenosilylfunktion umfasst.

**13.** Verwendung einer Verbindung **C** gemäß der Begriffsbestimmung in den Ansprüche 1 ä 3, in Gegenwart einer Verbindung **E** gemäß der Begriffsbestimmung nach den Ansprüchen 4 und 5, als Katalysator einer Hydrosilylierung und/oder wasserstoffabspaltenden Silylierung zwischen einer ungesättigten Verbindung **A** und einer Verbindung **B,** die mindestens eine Hydrogenosilylfunktion umfasst.

**14.** Verbindung **X,** die Folgendes umfasst:

- mindestens eine ungesättigte Verbindung **A,** die mindestens eine Alkenfunktion und/oder Alkinfunktion umfasst,
- mindestens eine Verbindung **B,** die mindestens eine Hydrogenosilylfunktion umfasst, und
- eine Verbindung **C** gemäß der Begriffsbestimmung in den Ansprüchen 1 bis 3.

**15.** Zusammensetzung **X** nach Anspruch 14, die darüber hinaus eine Verbindung **E** gemäß der Begriffsbestimmung nach den Ansprüchen 4 oder 5 umfasst.

**16.** Vernetzbare Zusammensetzung **X** nach Zusammensetzung 14, die Folgendes umfasst

- mindestens eine Organopolysiloxanverbindung **A,** die pro Molekül mindestens zwei $C_2$-$C_6$-Alkenylreste aufweist, die an Siliciumatome gebunden sind,
- mindestens eine Organohydrogenopolysiloxanverbindung **B,** die pro Molekül mindestens zwei Wasserstoffatome umfasst, die an dasselbe oder ein jeweils anderes Siliciumatom gebunden sind,
- mindestens eine Verbindung **C** gemäß der Begriffsbestimmung in den Ansprüchen 1 bis 3, und
- möglicherweise mindestens eine Verbindung **E** gemäß der Begriffsbestimmung nach den Ansprüchen 4 oder 5.

**17.** Vernetzbare Zusammensetzung **X** nach Anspruch 16, wobei:

a) die ungesättigte Verbindung **A** aus den Organopolysiloxanverbindungen ausgewählt ist, welche Bausteine der Formel (I) aufweisen:

$$Z_gU_hSiO_{(4-(g+h))/2} \qquad (I)$$

wobei:

- die Reste Z, welche vollkommen gleichartig oder verschiedenartig sind, für einen Alkenyl- oder Alkinylrest geradkettiger oder verzweigter Art mit 2 bis 6 Kohlenstoffatomen stehen;
- die Reste U, welche vollkommen gleichartig oder verschiedenartig sind, für einen Kohlenwasserstoffrest mit 1 bis 12 Kohlenstoffatomen stehen,
- g = 1 oder 2, h = 0, 1 oder 2 und g+h = 1, 2 oder 3 ist;

und die möglicherweise weitere Bausteine der Formel (II) aufweist:

$$U_iSiO_{(4-i)/2} \qquad (II)$$

wobei U dieselbe Bedeutung wie oben hat und i = 0, 1, 2 oder 3 ist, und
b) die Verbindung **B** aus den Organopolysiloxanen ausgewählt ist, welche mindestens einen Baustein der Formel (III) umfassen:

$$H_dU_eSiO_{(4-(d+e))/2} \qquad (III)$$

wobei:

- die Reste U, welche vollkommen gleichartig oder verschiedenartig sind, für einen Kohlenwasserstoffrest mit 1 bis 12 Kohlenstoffatomen stehen,
- d = 1 oder 2, e = 0, 1 oder 2 und d+e = 1, 2 oder 3 ist;

sowie möglicherweise weitere Bausteine der Formel (IV):

$$U_fSiO_{(4-f)/2} \qquad (IV)$$

wobei U dieselbe Bedeutung wie oben hat und f = 0, 1, 2 oder 3 ist.

**18.** Vernetztes Silikonmaterial **Y,** das erhalten wurde, indem eine vernetzbare Zusammensetzung **X** nach Anspruch 16 oder 17 auf eine Temperatur im Bereich von 15 bis 200 °C, vorzugsweise von 20 bis 150 °C, und stärker bevorzugt von 40 bis 120 °C, erhitzt wird.

## Claims

1. Process for preparing hydrosilylation and/or dehydrogenative silylation products by reaction between an unsaturated compound **A** comprising at least one alkene functional group and/or at least one alkyne functional group with a compound **B** comprising at least one hydrosilyl functional group, said process being **characterized in that** it is catalyzed by a cobalt compound C of formula (1):

$$[Co(N(SiR_3)_2)_x]_y \qquad (1)$$

in which:

- the symbols R, which are identical or different, represent a hydrogen atom or a hydrocarbon radical having from 1 to 12 carbon atoms, and preferably the symbols R, which are identical or different, are chosen from the group consisting of: the hydrogen atom, alkyl groups having from 1 to 8 carbon atoms, cycloalkyl groups having from 3 to 8 carbon atoms and aryl groups having from 6 to 12 carbon atoms,
- x = 1, 2 or 3 and
- y = 1 or 2.

2. Process according to Claim 1, in which the compound **C** has the formula (2):

$$[Co(N(SiR_3)_2)_2]_y \qquad (2)$$

in which:

- Co represents cobalt with a degree of oxidation of II
- the symbols R, which are identical or different, represent a hydrogen atom or a hydrocarbon radical having from 1 to 12 carbon atoms, and preferably the symbols R, which are identical or different, are chosen from the group consisting of: the hydrogen atom, alkyl groups having from 1 to 8 carbon atoms, cycloalkyl groups having from 3 to 8 carbon atoms and aryl groups having from 6 to 12 carbon atoms and
- y = 1 or 2.

3. Process according to Claim 1, in which the compound **C** has the formula (3):

$$[Co(N(Si(CH_3)_3)_2)_2]_y \qquad (3)$$

in which:

- Co represents cobalt with a degree of oxidation of II and
- y = 1 or 2.

4. Process according to any one of the preceding claims, carried out in the presence of a compound **E** of following formula (4):

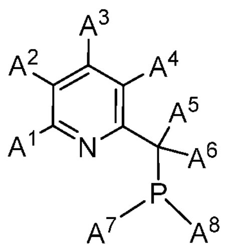

(4)

in which:

- $A^1$, $A^2$, $A^3$ and $A^4$ are chosen from: the hydrogen atom, alkyl groups having from 1 to 8 carbon atoms, cycloalkyl groups having from 6 to 12 carbon atoms, aryl groups having from 6 to 12 carbon atoms, halogens and alkoxy groups of formula $OR^1$ where $R^1$ is an alkyl group having from 1 to 8 carbon atoms,

- $A^5$ and $A^6$ are chosen from: the hydrogen atom, alkyl groups having from 1 to 8 carbon atoms, cycloalkyl groups having from 6 to 12 carbon atoms and aryl groups having from 6 to 12 carbon atoms, and
- $A^7$ and $A^8$ are chosen from: alkyl groups having from 1 to 8 carbon atoms, cycloalkyl groups having from 6 to 12 carbon atoms, aryl groups having from 6 to 12 carbon atoms and alkoxy groups of formula $OR^1$ where $R^1$ is an alkyl group having from 1 to 8 carbon atoms.

**5.** Process according to Claim 4, in which

- $A^1$, $A^2$, $A^3$ and $A^4$ are hydrogen atoms,
- $A^5$ and $A^6$ are hydrogen atoms,
- $A^7$ and $A^8$ are chosen from: alkyl groups having from 1 to 8 carbon atoms, cycloalkyl groups having from 6 to 12 carbon atoms, aryl groups having from 6 to 12 carbon atoms and alkoxy groups of formula $OR^1$ where $R^1$ is an alkyl group having from 1 to 8 carbon atoms and preferably $A^7$ and $A^8$ are chosen from the tert-butyl, isopropyl, methyl, ethyl, phenyl and cyclohexyl groups.

**6.** Process according to any one of Claims 1 to 3, in which the molar concentration of compound **C** is from 0.01% to 10%, preferably from 0.05% to 5% and more preferably from 0.1% to 3%, with respect to the total number of moles of unsaturations carried by the unsaturated compound **A.**

**7.** Process according to Claim 4 or Claim 5, in which the molar ratio of the compound **E** to cobalt is between 0.5 and 4, preferably between 0.8 and 3.5 and more preferably still between 1.5 and 3.

**8.** Process according to one of the preceding claims, **characterized in that** it does not employ compounds based on platinum, palladium, ruthenium or rhodium.

**9.** Process according to Claim 1, in which the unsaturated compound **A** comprises from 2 to 40 carbon atoms and one or more alkene or alkyne functional groups.

**10.** Process according to Claim 1, in which the compound **B** comprising at least one hydrosilyl functional group is chosen from the group consisting of:

- a silane or polysilane compound comprising at least one hydrogen atom bonded to a silicon atom,
- an organopolysiloxane compound comprising at least one hydrogen atom bonded to a silicon atom, preferably an organopolysiloxane compound comprising, per molecule, at least two hydrosilyl functional groups, and
- an organic polymer comprising hydrosilyl functional groups in the terminal positions.

**11.** Process according to Claim 1, in which:

a) the unsaturated compound **A** is chosen from organopolysiloxane compounds comprising units of formula (I):

$$Z_gU_hSiO_{(4-(g+h))/2} \quad (I)$$

in which:

- the radicals Z, which are identical or different, represent a linear or branched alkenyl or alkynyl radical having from 2 to 6 carbon atoms;
- the radicals U, which are identical or different, represent a hydrocarbon radical having from 1 to 12 carbon atoms;
- g = 1 or 2, h = 0, 1 or 2 and g+h = 1, 2 or 3; and optionally comprising other units of formula (II) :

$$UiSiO_{(4-i)/2} \quad (II)$$

in which U has the same meaning as above and i = 0, 1, 2 or 3, and

b) the compound **B** is an organopolysiloxane comprising at least one unit of formula (III):

$$H_dU_eSiO_{(4-(d+e))/2} \quad (III)$$

in which:

- the radicals U, which are identical or different, represent a hydrocarbon radical having from 1 to 12 carbon atoms;
- d = 1 or 2, e = 0, 1 or 2 and d+e = 1, 2 or 3; and optionally other units of formula (IV):

$$U_fSiO_{(4-f)/2} \qquad (IV)$$

in which U has the same meaning as above and f = 0, 1, 2 or 3.

**12.** Use of a compound **C** as defined in Claims 1 to 3 as catalyst for hydrosilylation and/or dehydrogenative silylation between an unsaturated compound **A** and a compound **B** comprising at least one hydrosilyl functional group.

**13.** Use of a compound **C** as defined in Claims 1 to 3 in the presence of a compound **E** as defined according to Claims 4 and 5 as catalyst for hydrosilylation and/or dehydrogenative silylation between an unsaturated compound **A** and a compound **B** comprising at least one hydrosilyl functional group.

**14.** Composition **X** comprising:

- at least one unsaturated compound **A** comprising at least one alkene functional group and/or one alkyne functional group,
- at least one compound **B** comprising at least one hydrosilyl functional group, and
- a compound **C** as defined in Claims 1 to 3.

**15.** Composition **X** according to Claim 14, additionally comprising a compound **E** as defined according to Claim 4 or Claim 5.

**16.** Crosslinkable composition **X** according to Claim 14, comprising:

- at least one organopolysiloxane compound **A** comprising, per molecule, at least two $C_2$-$C_6$ alkenyl radicals bonded to silicon atoms,
- at least one organohydropolysiloxane compound **B** comprising, per molecule, at least two hydrogen atoms bonded to an identical or different silicon atom,
- at least one compound **C** as defined in Claims 1 to 3, and
- optionally at least one compound **E** as defined according to Claim 4 or Claim 5.

**17.** Crosslinkable composition **X** according to Claim 16, in which:

a) the unsaturated compound **A** is chosen from organopolysiloxane compounds comprising units of formula (I):

$$Z_gU_hSiO_{(4-(g+h))/2} \qquad (I)$$

in which:

- the radicals Z, which are identical or different, represent a linear or branched alkenyl or alkynyl radical having from 2 to 6 carbon atoms;
- the radicals U, which are identical or different, represent a hydrocarbon radical having from 1 to 12 carbon atoms;
- g = 1 or 2, h = 0, 1 or 2 and g+h = 1, 2 or 3; and optionally comprising other units of formula (II):

$$U_iSiO_{(4-i)/2} \qquad (II)$$

in which U has the same meaning as above and i = 0, 1, 2 or 3, and

b) the compound **B** is chosen from organopolysiloxanes comprising at least one unit of formula (III):

$$H_dU_eSiO_{(4-(d+e))/2} \qquad (III)$$

in which:

- the radicals U, which are identical or different, represent a hydrocarbon radical having from 1 to 12 carbon atoms;
- d = 1 or 2, e = 0, 1 or 2 and d+e = 1, 2 or 3; and optionally other units of formula (IV):

$$U_fSiO_{(4-f)/2} \qquad (IV)$$

in which U has the same meaning as above and f = 0, 1, 2 or 3.

**18.** Crosslinked silicone material **Y** obtained by heating, to a temperature ranging from 15 to 200°C, preferably from 20 to 150°C and more preferably from 40 to 120°C, a crosslinkable composition **X** according to Claim 16 or 17.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0142258 A
- WO 2016071652 A
- US 20140231702 A
- US 20090182099 A
- US 20090182091 A